# EUROPEAN PATENT SPECIFICATION

(11) **EP 3 683 477 B1**
(45) Date of publication and mention of the grant of the patent: **30.08.2023**
(21) Application number: 20174957.9
(22) Date of filing: 15.05.2020
(51) Int. Cl.: F16K 15/14, A61C 17/02, F16K 17/02, F16K 24/06

(54) **CHECK VALVE, CONTAINER AND ORAL IRRIGATOR**
RÜCKSCHLAGVENTIL, BEHÄLTER UND MUNDDUSCHE
CLAPET ANTI-RETOUR, RÉCIPIENT ET IRRIGATEUR ORAL

(43) Date of publication of application: 22.07.2020
(73) Proprietor: Freeman Intelligent Power Inc., Rowland Heights, CA 91748 (US)
(72) Inventor: HUANG, Ziaoyue, Rowland Heights, CA 91748 (US)
(74) Representative: Dall'Olio, Christian

(56) References cited:
- CN-A- 109 381 272
- CN-U- 209 172 550
- JP-U- S63 166 772
- US-A- 6 092 551
- US-A1- 2007 138 189

## Description

### Technical Field

The invention relates to the technical field of oral irrigators.

### Description of Related Art

Check valve structures are arranged on some containers (such as the water tank of oral irrigators) to balance internal and external pressures of the containers so as to prevent substances (such as liquid) from flowing out of the containers. In the prior art, impermeable and breathable films are typically used to fulfill ventilation and avoid leakage of enclosed containers. Although the impermeable and breathable films can avoid liquid leakage, these films have a poor ventilation effect and may be broken under the atmospheric pressure when liquid in the containers is pumped out at a high rate. CN109381272A discloses an oral irrigator with a container comprising a check valve and a body having an air port. US6092551 discloses an example of a duckbill check valve used for pressure equilibration of a container. CN109381272 discloses an oral irrigator according to the preamble of claim 1.

### Brief Summary of the Invention

The technical issue to be settled by the invention is to provide an oral irrigator provided with a container provided with a breathable leakage-proof check valve.

A first technical solution adopted by the invention to settle the aforesaid technical issue is to provide an oral irrigator according to independent claim 1 and comprising a container and a check valve, which is made of an elastic material and comprises a valve body part with a hollow structure, wherein an opening communicated with the hollow structure is formed in the top of the valve body part, the valve body part comprises two opposite connection walls and two opposite membranes, two opposite sides of each connection wall are respectively connected to the membranes, the tops of the two membranes are away from each other, and the bottoms of the two membranes abut against each other.

The invention has the following beneficial effects: after the check valve is assembled on the container, the two membranes with the bottoms abutting against each other block a connection channel between the hollow structure of the check valve and an inner cavity of the container to prevent substances in the container from leaking via the check valve, so that a leakage prevention function of the check valve is realized; and when the air pressure in the container is lower than the external atmospheric pressure, external air will burst the two members to enable the bottoms of the two membranes to move away from each other to unblock the connection channel between the hollow structure of the check valve and the inner cavity of the container, so that a ventilation function of the check valve is realized. The check valve is simple in structure, easy to machine, low in production cost, small in size, good in structural stability and long in service life and occupies a small space.

### Detailed Description of the Several Views of the Drawings

FIG. 1 is a structural diagram of a check valve for an oral irrigator of the invention;
FIG. 2 is a structural diagram from another perspective of the check valve of FIG. 1;
FIG. 3 is a top view of a container for an oral irrigator of the invention;
FIG. 4 is a sectional view of the container of FIG. 3;
FIG. 5 is an enlarged view of part A in FIG. 4:
FIG. 6 is a sectional view from another perspective of the container of FIG. 3;
FIG. 7 is an enlarged view of part B in FIG. 6.

### Reference Signs:

1, valve body part; 2, connection wall; 3, membrane; 4, fixing part; 5, column part; 6, limit ring; 7, limit groove; 8, convex rib; 9, groove; 10, body; 11, air port; 12, liquid inlet/outlet; 13, snap ring; 14, ventilation groove.

### Detailed Description of the Invention

The technical contents, purposes and effects of the invention are expounded below in conjunction with the embodiments and accompanying drawings.

An oral irrigator comprises a container which comprises a check valve. Particularly, the container comprises a body 10 and a check valve arranged on the body 10.

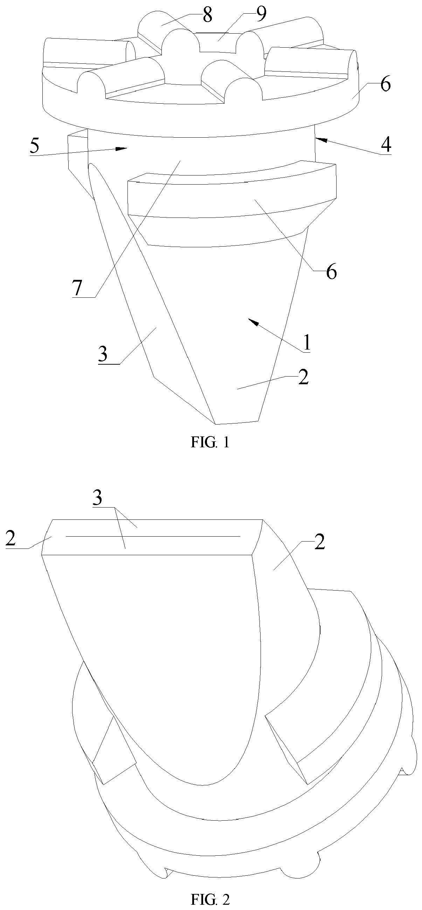

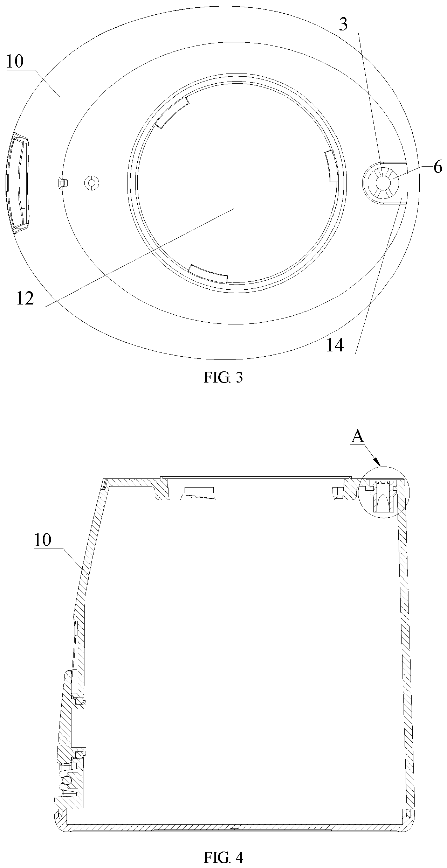

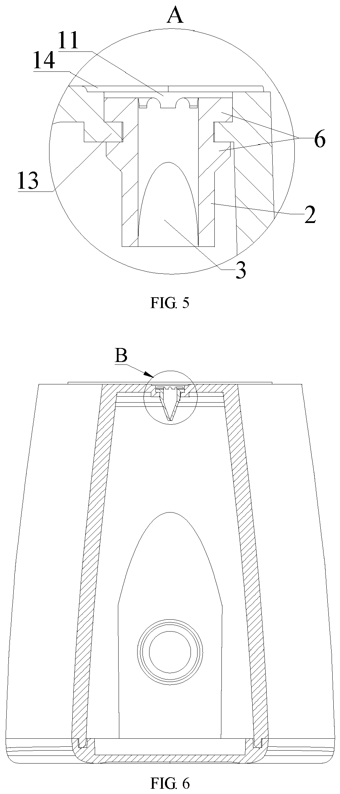

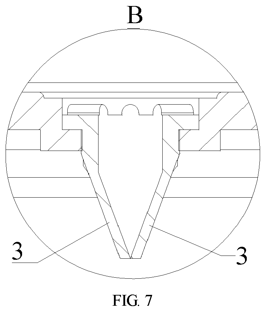

Referring to FIG. 1 to FIG. 7, the check valve is made of an elastic material and comprises a valve body part 1 with a hollow structure, wherein an opening communicated with the hollow structure is formed in the top of the valve body part 1, the valve body part 1 comprises two opposite connection walls 2 and two opposite membranes 3, two opposite sides of each connection wall 2 are respectively connected to the two membranes 3, the tops of the two membranes 3 are away from each other, and the bottoms of the two membranes 3 abut against each other.

The structure/working principle of the invention is as follows: after the check valve is assembled on a container, the two membranes 3 with the bottoms abutting against each other block a connection channel between the hollow structure of the check valve and an inner cavity of the container to prevent substances in the container from leaking via the check valve, so that a leakage prevention function of the check valve is realized; and when the air pressure in the container is lower than the external atmospheric pressure, external air will burst the two members 3 to enable the bottoms of the two membranes 3 to move away from each other to unblock the connection channel between the hollow structure of the check valve and the inner cavity of the container, so that a ventilation function of the check valve is realized.

From the above description, the invention has the beneficial effect that the check valve is simple in structure, easy to machine, low in production cost, small in size, good in structural stability and long in service life and occupies a small space.

Furthermore, the thickness of the membranes 3 is smaller than that of the connection walls 2.

From the above description, the structural strength of the connection walls 2 is higher than that of the membranes 3, so that the membranes 3 can deform more easily, and the opening/closing sensitivity of the check valve is improved.

Furthermore, at least one membrane 3 becomes thicker gradually from bottom to top. From the above description, the membranes become thicker gradually from bottom to top, so that both the structural strength and deformability of the membranes 3 are guaranteed. Understandably, when the thickness of one membrane 3 is kept consistent with that of the connection walls 2, the check valve provided by the invention is actually a single-membrane 3 check valve.

Furthermore, the two membranes 3 are arranged in a V shape.

Furthermore, the check valve further comprises a fixing part 4 which is connected to the top of the valve body part 1.

From the above description, the check valve is fixed to a container by means of the fixing part 4.

Furthermore, the fixing part 4 comprises a column part 5 formed with a through hole, and the through hole is communicated with the hollow structure via the opening.

From the above description, through the design of the shape of the column part 5 and the design of the relative positions of the column part 5 and the valve body part 1, the entire check valve can be in different shapes to adapt different application scenarios.

For example, the check valve is I-shaped, L-shaped, J-shaped, or the like.

Furthermore, a limit part is arranged on the outer wall of the column part 5.

From the above description, the check valve is fixed to a container by means of the limit part.

Furthermore, the limit part comprises two limit rings 6 which are spaced from each other, wherein a limit groove 7 is formed between the two limit rings 6, the limit ring 6 away from the valve body part 1 is located at an end of the fixing part 4 and has a top surface provided with a plurality of convex ribs 8 which are spaced from one another, and a groove 9 through which the outer wall of the limit ring 6 is communicated with the through hole is formed between every two adjacent convex ribs 8.

From the above description, through the design of the grooves 9, the ventilation capacity of the check valve can be improved, and the check valve can be prevented from being blocked.

Referring to FIG. 1 and FIG. 2, an embodiment provides a check valve for an oral irrigator according to the invention, wherein the check valve is made of an elastic material and comprises a valve body part 1 with a hollow structure, wherein an opening communicated with the hollow structure is formed in the top of the valve body part 1, the valve body part 1 comprises two opposite connection walls 2 and two opposite membranes 3, two opposite sides of each connection wall 2 are respectively connected to the two membranes 3, the tops of the two membranes 3 are away from each other to form the opening, and the bottoms of the two membranes 3 abut against each other to seal the bottom end of the hollow structure. Understandably, the opening is formed in the top end of the valve body part 1 or in a side wall of the valve body part 1.

Optionally, to guarantee the leakage prevention effect of the check valve, abutting planes are formed on the sides, close to each other, of the two membranes 3, and the two membranes 3 abut against each other by means of the abutting planes. In other words, the two membranes 3 are in surface contact.

The elastic material includes, but is not limited to, silica gel, rubber, soft plastic, and the like. In this embodiment, the check valve is made of silica gel with a hardness of 20duro-100duro.

The thickness of the membranes 3 is smaller than that of the connection walls 2 to ensure that the deformation degree of the membranes 3 is greater than that of the connection walls 2. At least one membrane 3 becomes thicker gradually from bottom to top, so that the bottom of the membrane 3 is more likely to deform, and the structural stability of the check valve is guaranteed.

The two membranes 3 are arranged in a V shape. Understandably, in the case where the two membranes 3 are not presented in a V shape from some perspectives and are presented in a V shape from a certain perspective when the check valve is rotated/turned, the two membranes 3 should also be appreciated as being arranged in a V shape.

When laterally viewed, the connection walls 2 are in an inverted triangle shape or in an inverted trapezoid shape.

The check valve further comprises a fixing part 4 which is connected to the top of the valve body part 1. Understandably, the fixing part 4 and the valve body part 2 are of an integrated structure, that is, the fixing part 4 and the valve body part 1 are integrally formed by injection molding. Specifically, the fixing part 4 comprises a column part 5 formed with a through hole, and the through hole is communicated with the hollow structure via the opening. More specifically, a limit part is arranged on the outer wall of the column part 5. According to the invention, the limit part comprises two limit rings 6 which are spaced from each other, wherein a limit groove 7 is formed between the two limit rings 6, the limit ring 6 away from the valve body part 1 being located at an end of the fixing part 4. In this embodiment, the limit ring 6 away from the valve body part has a top surface provided with a plurality of convex ribs 8 which are spaced from one another, and a groove 9 through which the outer wall of the limit ring 6 is communicated with the through hole is formed between every two adjacent convex ribs 8. Optionally, the convex ribs 8 are arranged in a radial direction of the column part 5.

In this embodiment, the column part 5 is cylindrical. In other embodiments, the column part 5 is J-shaped, L-shaped, or the like, and the column part 5 with a bent area can protect abutting areas of the two membranes 3 against a direct impact from substances in a container, so that the leakage prevention effect is further improved. Referring to FIG. 1 to FIG. 7, the body 10 has an air port 11 and at least one liquid inlet/outlet 12, wherein a snap ring 13 is arranged in the air port 11, the check valve is clamped on the container through the cooperation of the snap ring 13 and the limit groove 7, the air port 11 is formed in the top of the container, and a ventilation groove 14 communicated with the air port 11 is formed in the top surface of the container and extends to the outer wall of the container. Preferably, the top surface of the check valve is lower than the bottom surface of the ventilation groove 14.

According to the invention, the container is a water tank of an oral irrigator. The check valve can balance internal and external pressures of the container, so that the problems that liquid in the container cannot be easily pumped out and a container cover is difficult to open are effectively solved.

According to the check valve, the container and the oral irrigator provided by the invention, the check valve is simple in structure, easy to machine, low in production cost, small in size, good in structural stability and long in service life and occupies a small space; and internal and external pressures of the container are balanced, so that liquid can be smoothly pumped out of the container.

The aforesaid embodiments are only possible ones of the invention, and are not intended to the limit the patent scope of the invention as set forth in the claims.

## Claims

1. An oral irrigator comprising a container, the container comprising an inner cavity, a check valve and a body (10), the body having an air port (11) and at least one liquid inlet/outlet (12), wherein a snap ring (13) is arranged in the air port (11), **characterised in that** the check valve is made of an elastic material and comprises a valve body part (1) with a hollow structure,
wherein an opening communicated with the hollow structure is formed in a top of the valve body part (1), the valve body part (1) comprises two opposite connection walls (2) and two opposite membranes (3), two opposite sides of each said connection wall (2) are respectively connected to the two membranes (3), tops of the two membranes (3) are away from each other and bottoms of the two membranes (3) abut against each other;
wherein the check valve further comprises a fixing part (4) which is connected to the top of the valve body part (1) and which comprises a column part (5) formed with a through hole, and the through hole is communicated with the hollow structure via the opening;
wherein a limit part is arranged on an outer wall of the column part (5) and comprises two limit rings (6) which are spaced from each other, a limit groove (7) being formed between the two limit rings (6), the limit ring (6) away from the valve body part (1) being located at an end of the fixing part (4);
wherein the check valve is clamped on the container through the cooperation of the snap ring (13) and the limit groove (7);
wherein the air port (11) is formed in the top of the container and a ventilation groove (14) communicated with the air port (11) is formed in the top surface of the container and extends to the outer wall of the container.

2. The oral irrigator according to Claim 1, wherein a thickness of the membranes (3) is smaller than that of the connection walls (2).

3. The oral irrigator according to Claim 1, wherein at least one of the membranes (3) becomes thicker gradually from bottom to top.

4. The oral irrigator according to Claim 1, wherein the two membranes (3) are arranged in a V shape.

5. The oral irrigator according to any one of the previous Claims, wherein the top surface of the check valve is lower than the bottom surface of the ventilation groove (14).

6. The oral irrigator according to any one of the previous Claims, wherein the column part (5) is J-shaped or L-shaped to protect abutting areas of the two membranes (3) against a direct impact from substances in the container.

7. The oral irrigator according to any one of the previous Claims, wherein the limit ring (6) away from the valve body part (1) has a top surface provided with a plurality of convex ribs (8) which are spaced from one another, and a groove (9) through which an outer wall of the limit ring (6) is communicated with the through hole is formed between every two adjacent said convex ribs (8).

## Patentansprüche

1. Munddusche, umfassend einen Behälter, wobei der Behälter einen inneren Hohlraum, ein Rückschlagventil und einen Körper (10) umfasst, und der Körper einen Luftanschluss (11) und zumindest einen Flüssigkeitseinlass/-auslass (12) aufweist, wobei ein Sicherungsring (13) in dem Luftanschluss (11) angeordnet ist, **dadurch gekennzeichnet, dass** das Rückschlagventil aus einem elastischen Werkstoff gefertigt ist und einen Ventilkörperteil (1) mit einer hohlen Struktur umfasst,
wobei eine mit der hohlen Struktur verbundene Öffnung in einer Oberseite des Ventilkörperteils (1) ausgebildet ist, der Ventilkörperteil (1) zwei einander gegenüberliegende Verbindungswände (2) und zwei einander gegenüberliegende Membranen (3) umfasst, zwei einander gegenüberliegende Seiten jeder Verbindungswand (2) jeweils mit den zwei Membranen (3) verbunden sind, Oberseiten der zwei Membranen (3) voneinander entfernt sind und Unterseiten der zwei Membranen (3) gegeneinander anliegen;
wobei das Rückschlagventil ferner einen Befestigungsteil (4) umfasst, der mit der Oberseite des Ventilkörperteils (1) verbunden ist und der einen Säulenteil (5) umfasst, der mit einem Durchgangsloch ausgebildet ist, und das Durchgangsloch über die Öffnung mit der hohlen Struktur verbunden ist;
wobei ein Begrenzungsteil auf einer Außenwand des Säulenteils (5) angeordnet ist und zwei Begrenzungsringe (6) umfasst, die voneinander beabstandet sind, wobei eine Begrenzungsnut (7) zwischen den zwei Begrenzungsringen (6) gebildet wird und der Begrenzungsring (6), der weiter von dem Ventilkörperteil (1) entfernt ist, an einem Ende des Befestigungsteils (4) angeordnet ist;
wobei das Rückschlagventil durch das Zusammenwirken von Sicherungsring (13) und Begrenzungsnut (7) auf den Behälter geklemmt ist;
wobei der Luftanschluss (11) an der Oberseite des Behälters ausgebildet ist und eine mit dem Luftanschluss (11) verbundene Belüftungsnut (14) an der Oberseite des Behälters ausgebildet ist und sich zur Außenwand des Behälters erstreckt.

2. Munddusche nach Anspruch 1, wobei eine Dicke der Membranen (3) kleiner ist als die der Verbindungswände (2).

3. Munddusche nach Anspruch 1, wobei zumindest eine der Membranen (3) von unten nach oben allmählich dicker wird.

4. Munddusche nach Anspruch 1, wobei die zwei Membranen (3) V-förmig angeordnet sind.

5. Munddusche nach einem der vorhergehenden Ansprüche, wobei die obere Oberfläche des Rückschlagventils niedriger liegt als die untere Oberfläche der Belüftungsnut (14).

6. Munddusche nach einem der vorhergehenden Ansprüche, wobei der Säulenteil (5) J-förmig oder L-förmig ist, um Anlagebereiche der zwei Membranen (3) vor direktem Anprallen von Substanzen im Behälter zu schützen.

7. Munddusche nach einem der vorhergehenden Ansprüche, wobei der Begrenzungsring (6), der weiter von dem Ventilkörperteil (1) entfernt ist, eine obere Oberfläche aufweist, die mit einer Vielzahl von konvexen Rippen (8) versehen ist, die voneinander beabstandet sind, und wobei eine Nut (9), über die eine Außenwand des Begrenzungsrings (6) mit dem Durchgangsloch verbunden ist, zwischen jeweils zwei benachbarten konvexen Rippen (8) gebildet wird.

## Revendications

1. Un irrigateur oral comprenant un récipient, le récipient comprenant une cavité intérieure, un clapet anti-retour et un corps (10), le corps ayant un orifice d'air (11) et au moins une entrée/sortie (12) de liquide, dans lequel un anneau de retenue (13) est disposé dans l'orifice d'air (11), **caractérisé en ce que** le clapet anti-retour est réalisé dans un matériau élastique et comprend une partie de corps de clapet (1) ayant une structure creuse,
dans lequel une ouverture communiquant avec la structure creuse est formée dans une partie supérieure de la partie de corps de clapet (1), la partie de corps de clapet (1) comprend deux parois de raccordement (2) opposées et deux membranes (3) opposées, deux côtés opposés de chacune desdites parois de raccordement (2) sont respectivement raccordés aux deux membranes (3), les parties supérieures des deux membranes (3) sont éloignées l'une de l'autre et les parties inférieures des deux membranes (3) butent l'une contre l'autre ;
dans lequel le clapet anti-retour comprend en outre une partie de fixation (4) qui est raccordée à la partie supérieure de la partie de corps de clapet (1) et qui comprend une partie en colonne (5) formée avec un trou traversant, et le trou traversant communique avec la structure creuse via l'ouverture ;
dans lequel une partie de limite est disposée sur une paroi extérieure de la partie en colonne (5) et comprend deux anneaux de limite (6) qui sont espacés l'un de l'autre, une rainure de limite (7) étant formée entre les deux anneaux de limite (6), l'anneau de limite (6) éloigné de la partie de corps de clapet (1) étant situé à une extrémité de la partie de fixation (4) ;
dans lequel le clapet anti-retour est fixé sur le récipient par le biais de la coopération de l'anneau de retenue (13) et de la rainure de limite (7) ;
dans lequel l'orifice d'air (11) est formé dans la partie supérieure du récipient et une rainure de ventilation (14) communiquant avec l'orifice d'air (11) est formée dans la surface supérieure du récipient et s'étend jusqu'à la paroi extérieure du récipient.

2. L'irrigateur oral selon la revendication 1, dans lequel une épaisseur des membranes (3) est inférieure à celle des parois de raccordement (2).

3. L'irrigateur oral selon la revendication 1, dans lequel au moins une des membranes (3) s'épaissit progressivement du bas vers le haut.

4. L'irrigateur oral selon la revendication 1, dans lequel les deux membranes (3) sont disposées en forme de « V ».

5. L'irrigateur oral selon l'une quelconque des revendications précédentes, dans lequel la surface supérieure du clapet anti-retour est située plus bas que la surface inférieure de la rainure de ventilation (14).

6. L'irrigateur oral selon l'une quelconque des revendications précédentes, dans lequel la partie en colonne (5) est en forme de « J » ou en forme de « L » pour protéger des zones de butée des deux membranes (3) contre un impact direct de substances dans le récipient.

7. L'irrigateur oral selon l'une quelconque des revendications précédentes, dans lequel l'anneau de limite (6) éloigné de la partie de corps de clapet (1) a une surface supérieure dotée d'une pluralité de nervures convexes (8) qui sont espacées les unes des autres, et une rainure (9), à travers laquelle une paroi extérieure de l'anneau de limite (6) communique avec le trou traversant, est formée entre chaque paire de nervures convexes (8) adjacentes.
